# EUROPÄISCHE PATENTSCHRIFT

(11) **EP 0 558 807 B1**
(45) Veröffentlichungstag und Bekanntmachung des Hinweises auf die Patenterteilung: **21.02.1996**
(21) Anmeldenummer: 92119943.6
(22) Anmeldetag: 24.11.1992
(51) Int. Cl.: A01K 63/04

(54) **Innenfilter für Aquarien**
Inside filter for aquarium
Filtre intérieur pour aquarium

(30) Priorität: 29.02.1992 DE 4206425
(43) Veröffentlichungstag der Anmeldung: 08.09.1993
(73) Patentinhaber: EHEIM GMBH & CO. KG, D-73779 Deizisau (DE)
(72) Erfinder: Dieckmann, Klaus E., W-7343 Kuchen (DE); Herold, Ulrich, Dr., W-6940 Weinheim (DE); Mayer, Ferdinand, W-7070 Schwäbisch Gmünd (DE); Wiedenmann, Walter, W-7301 Deizisau (DE)
(74) Vertreter: Kratzsch, Volkhard, Dipl.-Ing.

(56) Entgegenhaltungen:
- GB-A- 2 245 934
- US-A- 4 559 136
- US-A- 5 006 238
- US-A- 5 087 357

## Beschreibung

Die Erfindung bezieht sich auf einen Innenfilter für Aquarien der im Oberbegriff des Anspruchs 1 genannten Art.

Es ist ein Innenfilter dieser Art bekannt (DE-GM 81 26 762.2), der etwa stabförmig gestaltet ist und einen oberen, mit einem Deckel abgeschlossenen Pumpenkopf aufweist, in dem der komplette Elektromotor mit Stator und Rotor sowie dessen Lagerachse und Lagern einschließlich dem vom Rotor angetriebenen Pumpenrad enthalten sind und in dem die Pumpenkammer und der Druckkanal angeordnet sind. Der Elektromotor mit seinen Bestandteilen ist in diesem Pumpenkopf fest installiert. Die Pumpenkammer und das darin angeordnete Pumpenrad befinden sich unterhalb des Stators und des Rotors. Unterhalb dieses Pumpenkopfes ist ein Gehäuseteil angesetzt, das einen zum Rotor koaxialen zentralen Saugkanal enthält, der z.B. durch ein mit Durchbrüchen versehenes Rohr definiert ist. Auf das Rohr ist mindestens ein Filtereinsatz aufgesetzt. Das diesen Filtereinsatz enthaltende Gehäuseteilweist in seiner Wandung Durchbrüche auf, durch die hindurch Wasser eingesaugt und durch den Filtereinsatz in das zentrale, den Saugkanal bildende Rohr eingesaugt werden kann. Von dort gelangt das Wasser aufgrund der Pumpe durch die Pumpenkammer im Pumpenkopf und von dieser in den darin befindlichen Druckkanal, durch den das Wasser nach oben geführt wird, bis es aus einer oben befindlichen Austrittsöffnung aus dem Pumpenkopf austreten kann. Bei diesem Innenfilter ist das untere Ende der Lagerachse in einem besonderen Bodenteil gehalten, der von unten her lösbar an den Pumpenkopf angesetzt ist und sich zwischen diesem und dem unten anschließenden Gehäuseteil befindet, in dem der Filtereinsatz enthalten ist. Soll dieser bekannte Innenfilter gereinigt werden, so muß er als Ganzes aus dem Aquariumbecken entnommen und dann demontiert werden. Zum Wechsel des Filtereinsatzes läßt sich der untere rohrförmige Gehäuseteil abziehen. Soll jedoch z.B. das Pumpenrad, der benachbarte Bereich des Rotors, der Bereich der Pumpenkammer oder der Druckkanal gereinigt werden, so muß zunächst der bodenseitige Abschluß des Pumpenkopfes gelöst und abgenommen werden. Dann kann der Rotor mit Lagerachse und Lagern evtl. in seine Einzelteile zerfallen, so daß ein Zusammenbau Probleme mit sich bringt. Außerdem sind die einzelnen Bereiche selbst bei entferntem Rotor mit Pumpenrad nach wie vor schlecht zugänglich und somit schlecht zu reinigen.

Der Erfindung liegt die Aufgabe zugrunde, einen Innenfilter für Aquarien der eingangs genannten Art so auszubilden, daß dieser vom Benutzer ohne besondere Fachkenntnis und Hilfswerkzeuge schnell und einfach so demontierbar ist, daß ein in der Filterkammer befindlicher Filtereinsatz schnell und problemlos ausgewechselt werden kann und auch die sonstigen Funktionsteile des Innenfilters zu Reinigungs-, Wartungs- und Reparaturzwecken gut zugänglich sind.

Die Aufgabe ist bei einem Innenfilter für Aquarien der eingangs genannten Art gemäß der Erfindung durch die Merkmale im Kennzeichnungsteil des Anspruchs 1 gelöst. Weitere vorteilhafte Erfindungsmerkmale und Ausgestaltungen dazu ergeben sich aus den Ansprüchen 2 bis 34.

Durch die Unterteilung des Innenfilters in die drei voneinander lösbaren bzw. wieder zusammensetzbaren Segmente, von denen das erste Segment im wesentlichen den Stator mit elektrischer Zuleitung enthält, ist es möglich gemacht, z.B. zum Austausch des Filtereinsatzes oder zu sonstigen Reinigungs- oder Wartungsarbeiten lediglich das dritte und zweite Segment abzulösen, während das erste Segment nach wie vor innerhalb des Aquariumbeckens an vorgesehener Stelle verbleiben kann. Das abgelöste zweite und dritte Segment kann aus dem Becken entnommen und bedarfsweise gereinigt werden. Wenn es nur darum geht, den Filtereinsatz zu wechseln, muß lediglich das dritte Segment abgehoben werden, so daß das obere Ende des zweiten Segments zur Entnahme des Filtereinsatzes freigelegt ist. Der Filtereinsatz läßt sich dann schnell und problemlos nach oben entnehmen, ohne daS im übrigen die Gefahr besteht, daS etwaige am Filtereinsatz haftende Schmutzpartikel in das Aquariumbecken gelangen. Soll auch eine Reinigung z.B. des dritten Segments oder auch des zweiten Segments erfolgen, so werden beide Segmente bei im Aquariumbecken verbleibendem ersten Segment aus dem Becken entnommen, gereinigt und wieder eingesetzt. Auch dies läßt sich vom Benutzer ohne besondere Fachkenntnisse und Spezialwerkzeuge schnell und problemlos bewerkstelligen.

Weitere Einzelheiten und Vorteile der Erfindung ergeben sich aus der nachfolgenden Beschreibung.

Der vollständige Wortlaut der Ansprüche ist vorstehend allein zur Vermeidung unnötiger Wiederholungen nicht wiedergegeben, sondern statt dessen lediglich durch Nennung der Anspruchsnummern darauf Bezug genommen, wodurch jedoch alle diese Anspruchsmerkmale als an dieser Stelle ausdrücklich und erfindungswesentlich offenbart zu gelten haben.

Die Erfindung ist nachfolgend anhand von in den Zeichnungen gezeigten Ausführungsbeispielen näher erläutert. Es zeigen:
- Fig. 1: eine perspektivische Explosionsdarstellung eines Innenfilters für Aquarien, bei der die einzelnen separierten Segmente zur Vereinfachung nur schematisch dargestellt sind,
- Fig. 2: eine schematische perspektivische Darstellung mit vertikalem Schnitt des Innenfilters in Fig. 1 im funktionsbereiten Zustand,
- Fig. 3: einen schematischen vertikalen Schnitt des Innenfilters in Fig. 1 und 2,
- Fig. 4: eine Ansicht der Kappe des Innenfilters in Pfeilrichtung IV in Fig. 3,
- Fig. 5: eine Ansicht des Innenfilters in Pfeilrichtung V in Fig. 3 bei abgenommenem oberen dritten Segment,

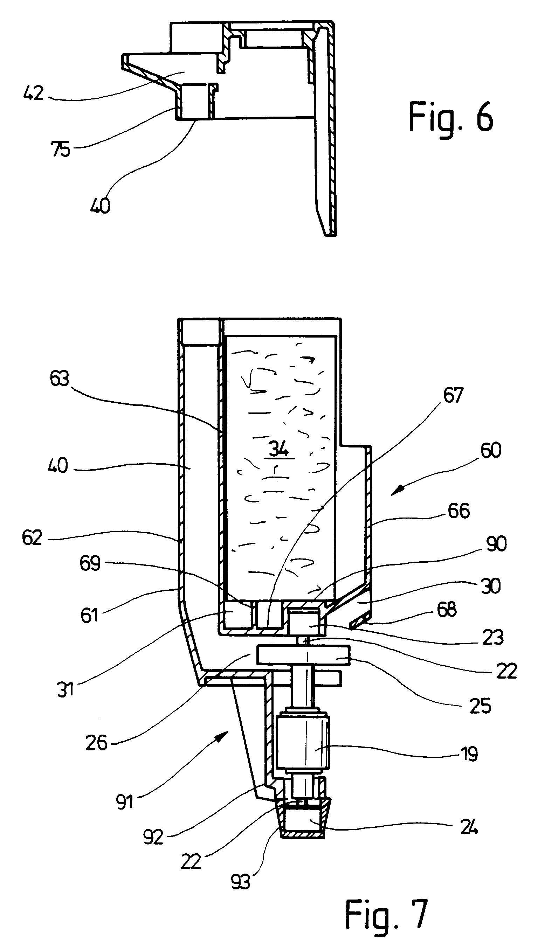

- Fig. 6: eine schematische, teilweise geschnittene Seitenansicht des dritten Segments des Innenfilters, ohne eingesetzte Kappe und ohne eingesetzten Schieber der Volumensteuerung,
- Fig. 7: eine zum Teil geschnittene Seitenansicht des herausgenommenen zweiten Segments des Innenfilters.

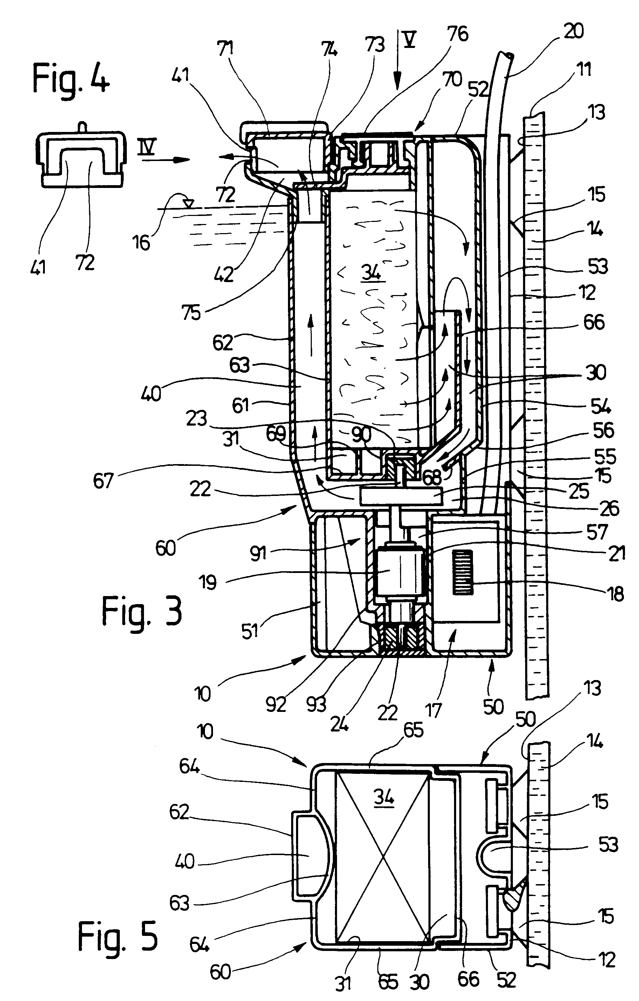

In den Zeichnungen ist ein Innenfilter 10 gezeigt, der mit Vorteil z. B. als Kleinstfilter dimensioniert sein kann, der sich z. B. für Aquarien bis 60 Liter Inhalt eignet. Der Innenfilter 10 wird, wie in Fig. 3 angedeutet ist, in ein Aquariumbecken 11 eingetaucht und mit seiner Rückseite 12 an der zugewandten Innenseite 13 einer Aquariumwand 14 mittels geeigneter Halter 15, vorzugsweise mittels Saugern, lösbar befestigt. Der Wasserstand im Aquariumbecken 11 ist in Fig. 3 mit 16 angedeutet, woraus zugleich ersichtlich ist, daß der Innenfilter 10 entsprechend tief in das im Aquariumbecken 11 befindliche Wasser eintaucht.

Der Innenfilter 10 weist einen Elektromotor 17 auf, der in üblicher Weise einen Stator 18 und einen Rotor 19 hat und über eine elektrische Zuleitung 20 vom Stromnetz gespeist wird, wobei die Zuleitung 20 aus dem Aquariumbecken 11 nach oben herausgeführt ist. Der Elektromotor 17 kann herkömmlicher Art sein, z. B. als selbstanlaufender Synchronmotor ausgebildet sein, dessen Rotor 19 permanentmagnetisch ist, z. B. zwei- oder mehrpolig ausgebildet und radial polarisiert ist, so daS die Magnetpole mit wechselnder Polarität gleichmäßig rings um den Rotorumfang verteilt sind. Dabei befindet sich der Rotor 19 in einem Durchlaß 21 des Stators 18 unter Bildung des erforderlichen Luftspaltes. Der Rotor 19 ist auf einer einteiligen oder zweiteiligen Lagerachse 22 gehalten und drehbar gelagert, die im wesentlichen vertikal verläuft und mit beiden Enden in zugeordneten Lagern 23 bzw. 24 gehalten ist, die z. B. aus elastischen Elementen, beispielsweise Gummitüllen, bestehen. Der Rotor 19 treibt ein Pumpenrad 25 einer Pumpe an, das sich oberhalb des Rotors 19 und innerhalb einer Pumpenkammer 26 befindet und z. B. mehrflügelig, wie gezeigt, ausgebildet ist.

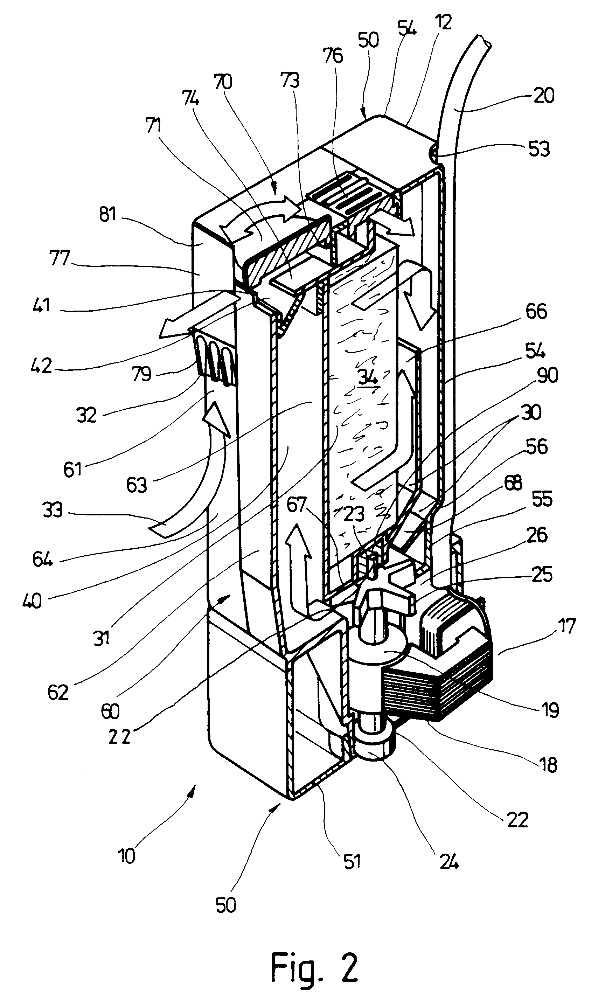

Der Innenfilter 10 weist ferner einen allgemein mit 30 bezeichneten Saugkanal im Inneren auf, der einerseits mit der Pumpenkammer 26 in Verbindung steht und dem eine Filterkammer 31 im Innenfilter 10 vorgeschaltet ist, mit der der Saugkanal 30 ebenfalls Verbindung hat. In die Filterkammer 31 ist bei umlaufendem Pumpenrad 25 über mindestens eine nach außen hin offene und unter dem Niveau des Wasserstands 16 befindliche Ansaugöffnung 32 Wasser aus dem Aquariumbecken 11 einsaugbar, wie in Fig. 2 durch einen Pfeil 33 verdeutlicht ist. In der Filterkammer 31 kann mindestens ein schematisch angedeuteter Filtereinsatz 34 enthalten sein, der aus Filtermaterial besteht, z. B. aus Schaumstoff oder aus anderem geeigneten Filtermaterial, auch Aktivkohle od. dgl.. Dieser Filtereinsatz 34 ist nur schematisch hier als zusammenhängender, nach oben herausziehbarer Viereckblock angedeutet. Er wird vom angesaugten Wasser entsprechend den Pfeilen in Fig. 2 und 3 auf seiner gesamten Vertikalerstreckung oder zumindest auf einem wesentlichen Teil dieser quer durchströmt, woraufhin das Wasser nach Passieren des Filtereinsatzes 34, des Saugkanals 30 und der Pumpenkammer 26 in einen Druckkanal 40 gelangt, der einerseits mit der Pumpenkammer 26 und andererseits mit mindestens einer Austrittsöffnung 41 in Verbindung steht, aus der das Wasser entsprechend den Pfeilen in Fig. 2 und 3 aus dem Innenfilter 10 austritt und in das Aquariumbecken 11 zurück gelangt. Der Innenfilter 10 ist dabei so tief in das Wasser im Aquariumbecken eingetaucht, daß mit Vorzug die mindestens eine Austrittsöffnung 41 sich oberhalb des Wasserstandes 16 befindet.

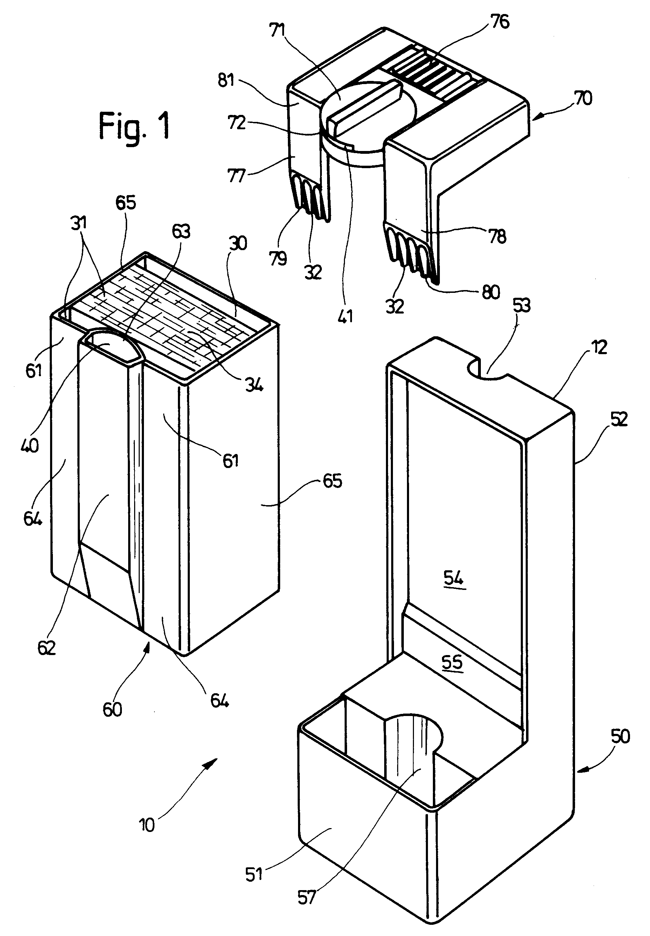

Eine weitere Besonderheit des Innenfilters 10 liegt darin, daß dieser aus drei voneinander lösbaren bzw. wieder zusammensetzbaren, z. B. zusammensteckbaren, Segmenten 50, 60 und 70 zusammengesetzt ist, die so gestaltet sind, daß diese Segmente 50, 60 und 70 vom Benutzer selbst bedarfsweise jederzeit voneinander getrennt werden können, z. B. so, wie in Explosionsdarstellung in Fig. 1 schematisch angedeutet ist. In der Regel wird dabei das erste Segment 50 innerhalb des Aquariumbeckens 11 und dabei an der Aquariumwand 14 lösbar befestigt verbleiben und nur das zweite Segment 60 und dritte Segment 70 vom ersten Segment 50 nach oben hin abgezogen, wie später noch näher erläutert wird.

Das erste Segment 50 ist etwa L-förmig ausgebildet, wobei der kürzere L-Schenkel 51 nach vorn ragt und auf diesen das zweite Segment 60 in vertikaler Richtung von oben aufsetzbar ist. Das erste Segment 50 enthält im wesentlichen den Stator 18 des Elektromotors 17 mit elektrischer Zuleitung 20 und bildet den Teil, der mit seiner Rückseite 12 lösbar an der Aquariumwand 14 befestigt werden kann, wie schon erläutert ist, und der z. B. zur Reinigung des Innenfilters 10 in dieser fest angebrachten Position gemäß Fig. 3 verbleiben kann.

Das zweite Segment 60 ist so gestaltet, daß es im wesentlichen den Rotor 19 mitsamt Lagerachse 22 und Lagern 23 und 24 sowie Pumpenrad 25 enthält und ferner die Pumpenkammer 26, zumindest deren größten Teil, sowie die Filterkammer 31, den Druckkanal 40 und den Saugkanal 30, wobei von letzterem zumindest ein wesentlicher Teil Bestandteil des zweiten Segments 60 ist.

Das dritte Segment 70 ist als etwa kappenförmiger Deckel ausgebildet und auf das zweite Segment 60 oben aufsetzbar, wobei es letzteres oben abschließt. Dabei weist das dritte Segment 70 die mit der Filterkammer 31 in Verbindung bringbare, mindestens eine Ansaugöffnung 32 sowie die mit dem Druckkanal 40 in Verbindung bringbare mindestens eine Austrittsöffnung 41 auf.

Der so zusammengesetzte Innenfilter 10 hat im zusammengesetzten Zustand dieser drei Segmente 50, 60 und 70 einen langgestreckten und im wesentlichen viereckigen, insbesodnere etwa rechteckigen oder quadratischen, Körper, wie sich insbesondere aus Fig. 2 ergibt, wobei in Gebrauchsstellung dieser Körper etwa vertikal ausgerichtet und im Aquariumbecken 11 gehalten ist. Das dritte Segment 70, insbesondere in Form des etwa kappenartigen Deckels, ist auf die Oberseite des zweiten Segments 60, nicht hingegen des ersten Segments 50, aufsetzbar, wobei es im aufgesetzten Zustand das zweite Segment 60 oberseitig bis auf die Höhe des etwa vertikalen, längeren L-Schenkels 52 des ersten Segments 50 verlängert. Bei einem nicht gezeigten Ausführungsbeispiel hat der Innenfilter einen langgestreckten und im wesentlichen runden und/oder eckigen, z.B. auch dreieckigen, Körper.

Das dritte Segment 70 weist eine z. B. runde Kappe 71 auf, die den Druckkanal 40 etwa im Bereich seines oberen Endes 42 abschließt und zumindest eine Öffnung 72 enthält, die entsprechend der Ansicht in Fig. 4 z. B. als etwa umgekehrt U-förmiger Schlitz ausgebildet ist und die eingangs beschriebene Austrittsöffnung bildet, durch die das Wasser aus dem Druckkanal 40 austritt und in das Aquariumbecken 11 zurück gelangt. Die Kappe 71 hat eine z. B. etwa zylindrische Wandung 73 und ist mit dieser in das dritte Segment 70 eingesetzt und darin schwenkverstellbar gehalten, z. B. um einen Schwenkwinkel von z. B. maximal 70°. Dadurch bildet die Kappe 71 einen oberen Schwenkauslauf, wobei der Benutzer durch Drehverstellung der Kappe 71 die Auslaufrichtung vorgeben kann.

Außerdem ist das dritte Segment 70 mit einer Einrichtung zur Steuerung des Volumenstromes versehen. Hierzu enthält das dritte Segment 70 z. B. einen den Durchlaßquerschnitt im Druckkanal 40, insbesondere im Übergangsbereich vom Druckkanal 40 zur Austrittsöffnung 41, steuernden Schieber 74, mittels dessen der Volumenstrom steuerbar ist. Der Schieber 74 greift quer in einen Rohrteil 75 des dritten Segments 70 ein und steuert dessen Durchlaßquerschnitt.

Am Schieber 74 greift eine von außen faßbare, in gleicher Schieberichtung betätigbare Verstellhandhabe 76 an, die im dritten Segment 70 querverschiebbar gehalten ist. Das dritte Segment 70 ist als einstückiges Kunststofformteil ausgebildet, in das die Kappe 71 und der querverschiebliche Schieber 74 mitsamt Verstellhandhabe 76 auswechselbar eingesetzt sind. Das dritte Segment 70 ist z. B. mittels Steckverbindung mit dem oberen Ende des zweiten Segments 60 verbindbar. Dabei greift der Rohrteil 75 in das oben offene Ende 42 des Druckkanals 40 ein, unter Herstellung einer zumindest im wesentlichen dichten Verbindung.

Wie insbesondere aus Fig. 1 ersichtlich ist, weist das dritte Segment 70 mindestens einen Fortsatz, beim gezeigten Ausführungsbeispiel zwei Fortsätze 77, 78, auf, von denen jeder mit die Ansaugöffnungen 32 bildenden Öffnungen 79 bzw. 80, z. B. etwa vertikal gerichteten Schlitzen, versehen ist, wobei jeder Fortsatz 77, 78 von den Öffnungen 79 bzw. 80 in den Saugkanal 30, insbesondere zunächst in die Filterkammer 31, überleitet. Die beiden Fortsätze 77,78 befinden sich auf der in Fig. 1 und 2 nach links gerichteten Vorderseite 81 und stehen dort etwas über. Dabei verlaufen die Fortsätze 77, 78 in Abstand voneinander und etwa parallel zueinander, wobei sie jeweils gleichartig gestaltet sind. Jeder Fortsatz 77, 78 übergreift das zweite Segment 60 an dessen zugewandtem oberen Ende auf der entsprechenden Vorderseite 61 dieses.

Die die Austrittsöffnung 41 bildende Öffnung 72 in der Kappe 71, insbesondere in deren Wandung 73, beim dritten Segment 70 ist auf der gleichen Vorderseite 81 wie die mittels der beidseitigen Fortsätze 77, 78 gebildeten, Ansaugöffnungen 32 formenden Öffnungen 79 bzw. 80 vorgesehen, jedoch mit Abstand oberhalb davon, so daß eine deutliche vertikale Trennung zwischen der Austrittsöffnung 41 einerseits und den Ansaugöffnungen 32 andererseits gegeben ist.

Nachfolgend sind Einzelheiten des ersten Segments 50 erläutert. Dieses ist mit Vorzug als einstückiges Kunststofformteil gestaltet, in das der Stator 18 mit elektrischer Zuleitung 20 eingesetzt ist. Die Rückseite 12 des längeren, etwa vertikalen L-Schenkels 52 bildet die Befestigungsseite, an der Halter 15, z. B. Sauger, zur lösbaren Anbringung an der Innenseite 13 der Aquariumwand 14 angeordnet sind. In diesr Rückseite 12 ist eine etwa rinnenförmige Aufnahme 53 enthalten, in der die elektrische Zuleitung 20 nach oben geführt ist. Der Stator 18 des Elektromotors 17 ist im unteren Teil des ersten Segments 50 enthalten, insbesondere im etwa horizontalen, kürzeren L-Schenkel 51 und/oder Übergangsbereich beider Schenkel 51, 52 ineinander, wo entsprechend Platz vorhanden ist. Der Stator 18 ist im ersten Segment 50 befestigt und dabei mit wasserdichtem Abschluß. Der den Rotor 19 aufnehmende Durchlaß 21 im Stator 18 ist im wesentlichen vertikal gerichtet.

Mit einer etwa vertikal verlaufenden vorderen Wandung 54 des ersten Segments 50, die in Abstand von der Rückseite 12 verläuft, bildet das erste Segment 50 eine rückseitige Wandungsbegrenzung des Saugkanals 30, der somit beim Abziehen des zweiten Segments 60 vom an der Aquariumwand 14 verbleibenden ersten Segment 50 freilegbar ist. Ersichtlich bildet diese vordere Wandung 54 im unteren Bereich 55, der etwa bis zum etwa horizontalen, kürzeren L-Schenkel des ersten Segments 50 führt, einen Teil der Wandungsbegrenzung der Pumpenkammer 26, in die eine Schrägwand 56 überleitet.

Das zweite Segment 60 ist ebenfalls als einstückiges Kunststofformteil ausgebildet, in das der Rotor 19 mitsamt Lagerachse 22 und Lagern 23, 24 sowie Pumpenrad 25 und ggf. mindestens ein Filtereinsatz 34 auswechselbar eingesetzt sind.

Das zweite Segment 60 ist um die Höhe des dritten Segments 70 und um die Höhe des etwa horizontalen kürzeren L-Schenkels 51 des ersten Segments 50 kürzer und um die Tiefe des etwa vertikalen L-Schenkels 52 schmaler als das erste Segment 50 bemessen. Die Bemessung ist derart gewählt, daß das zweite Segment 60 - auf den nach vorn hin überstehenden Teil des etwa horizontalen kürzeren L-Schenkels 51 des ersten Segments 50 aufgesetzt - das erste Segment 50 zu einem im Querschnitt im wesentlichen viereckigen, insbesondere etwa rechteckigen oder quadratischen, Körper ergänzt, wie Fig. 2 zeigt.

Das zweite Segment 60 weist einen durch bis in die Pumpenkammer 26 führende Wände 62, 63 abgeschlossenen, etwa L-förmigen Innenkanal auf, der den Druckkanal 40 bildet und dessen etwa vertikaler, längerer L-Schenkel vorderseitig verläuft und dessen etwa horizontaler, kürzerer L-Schenkel sich zur Rückseite hin unter Bildung der Pumpenkammer 26 erstreckt und unten im Bodenbereich verläuft. Dadurch ist im Inneren des zweiten Segments 60 angrenzend an die innen verlaufende Wand 63 die Filterkammer 31 geschaffen, die somit durch die innenseitig verlaufende Wand 63, ferner durch die übrigen Bereiche der daran angrenzenden Vorderwand 64 und durch zwei zueinander etwa parallele Seitenwände 65 begrenzt ist. Das zweite Segment 60 weist auf seiner Rückseite, die der vorderen Wandung 54 des ersten Segments 50 zugewandt ist, einen hochragenden Wandteil 66 auf, der sich etwa über die halbe Höhe des zweiten Segments 60 erstreckt und die Filterkammer 31 begrenzt. Der Wandteil 66 begrenzt außerdem mit seiner Rückseite einen entsprechenden Abschnitt des Saugkanals 30, der im betriebsfähigen Zustand des Innenfilters 10 durch die zum ersten Segment 50 gehörige vordere Wand 54 rückseitig begrenzt ist.

Ferner enthält das zweite Segment 60 einen Bodenteil 67, der einstückig an die Wand 63 und den rückseitigen Wandteil 66 angeschlossen ist und in Querrichtung von der einen Seitenwand 65 zur anderen Seitenwand 65 reicht. Die nach oben weisende Seite des Bodenteils 67 bildet den Boden der Filterkammer 31, während die nach unten weisende Seite eine oberseitige Begrenzung der Pumpenkammer 62 bildet. Der hochragende Wandteil 66 geht im Bogen oder, wie hier gezeigt ist, schräg in den Bodenteil 67 über, wobei der Schrägverlauf etwa demjenigen der rückseitig in Abstand davon verlaufenden Schrägwand 56 am ersten Segment 50 entspricht. In Verlängerung dieser Schrägwand 56 erstreckt sich ein kurzes schräges Wandstück 68, das von einer Seitenwand 65 bis zur anderen Seitenwand 65 reicht und ebenfalls einstückiger Teil des Segments 60 ist. Das Wandstück 68 setzt somit den Schrägverlauf der Schrägwand 56 fort und komplettiert damit den schräg nach unten gerichteten Überleitungsabschnitt, über den der Saugkanal 30 mit der Pumpenkammer 26 verbunden ist.

Im Bereich des Bodenteils 67 ist ein in die Filterkammer 31 eingebrachter Filtereinsatz 34 mit seinem unteren Ende in Abstand oberhalb des Bodenteils 67 gehalten. Dies hat den Vorteil, daß etwaige abgefilterte Schmutzpartikel od. dgl. sich in diesem unteren Bereich sammeln können. Der zumindest etwa über die halbe Höhe des zweiten Segments 60 nach oben gerichtete Wandteil 66 hat noch den Vorteil, daß er zusammen mit den Seitenwänden 65 und der inneren Wand 63 sowie den beidseitig davon verlaufenden Bereichen der Vorderwand 64 eine Wanne mit entsprechender Höhe bildet, in der z. B. beim Herausziehen des Filtereinsatzes 34 nach oben hin Wasser verbleibt, das im zweiten Segment 60 und auch im Filtereinsatz 34 enthalten ist und mit Schmutzpartikeln beladen sein kann. Damit ist gewährleistet, daß beim Wechsel des Filtereinsatzes 34 in dieser beschriebenen Wanne befindliches und evtl. verunreinigtes Wasser dort gefangen bleibt und nicht in das Aquariumbecken 11 auslaufen kann.

Zur vertikalen Abstandshalterung des Filtereinsatzes 34 dienen z. B. hochragende Vorsprünge 69, z. B. Stege, auf denen der Filtereinsatz 34 in der Filterkammer 31 aufsitzt.

Der Bodenteil 67 des zweiten Segments 60 weist eine nach oben und zur Filterkammer 31 hin gerichtete, im Querschnitt etwa umgekehrt U-förmige Ausstülpung 90 auf, in der das obere Lager 23, z. B. eine Gummitülle, für das obere Ende der Lagerachse 22 des Rotors 19 aufgenommen ist. Auch diese Austülpung 90 bildet mit ihrer zur Filterkammer 31 weisenden Oberwand einen dem Vorsprung 69 entsprechenden Vorsprung, der als Abstandshalter unterseitig des darauf aufsitzenden Filtereinsatzes 34 dienen kann.

Der Druckkanal 40 ist als Innenkanal im zweiten Segment 60 gestaltet, der von der Filterkammer 31 abgetrennt ist. Dieser Innenkanal ist zum einen durch die vorderseitige Wand 62 nach außen begrenzt, die als zumindest geringfügig etwa balkonartig nach vorn vorstehender Wandstreifen gestaltet ist, der etwa im mittleren Bereich der Vorderseite 61 des zweiten Segments 60 von oben nach unten und zwischen den beidseitig daran anschließenden Vorderwänden 64 verläuft. Nach innen ist der Innenkanal durch die innere Wand 63 begrenzt, die nach innen zur Filterkammer 31 hin vorgewölbt ist und die sich etwa über die Breite der äußeren Wand 62 erstreckt und mit ihren Seitenrändern von innen her bis an die Wand 62 unter Bildung eines abgeschlossenen Kanals heranreicht. Beide Wände 62 und 63 begrenzen somit einen inneren Rohrkanal, der in Bezug auf die Filterkammer 31 bis hin zur Pumpenkammer 26 abgeschlossen ist.

Das zweite Segment 60 weist außerdem im Bereich unterhalb der Pumpenkammer 26 eine nach unten vorstehende Haltevorrichtung 91 auf, an der der Rotor 19 mitsamt der Lagerachse 22 und den Lagern 23 und 24 gehalten ist. Beim Aufsetzen des zweiten Segments 60 auf den etwa horizontalen kürzeren L-Schenkel 51 des ersten Segments 50 taucht diese Haltevorrichtung 91 in das Innere 57 dieses Schenkels 51 des ersten Segments 50 derart ein, daß der Rotor 19 darin aufgenommen wird und hierbei in den Durchlaß 21 des Stators 18 hineingelangt. Die Haltevorrichtung 91 weist einen nach unten vorstehenden Tragteil 92 und daran eine untere Lagerkappe 93 auf, in der das untere Lager 24, z. B. eine Gummitülle, für das untere Ende der Lagerachse 22 des Rotors 19 aufgenommen ist. Der Rotor 19 mit Lagerachse 22 und beidseitigen Lagern 23 und 24 ist auf diese Weise allein im zweiten Segment 60 gehalten, wobei das Pumpenrad 25 am oberen, in die Pumpenkammer 26 hinein vorstehenden Ende des Rotors 19 gehalten ist.

Ist der Innenfilter 10 betriebsfertig zusammengesetzt, wie Fig. 2 und 3 zeigen, und in beschriebener Weise in das Aquariumbecken 11 eingesetzt und an der Aquariumwand 14 befestigt, so wird bei eingeschaltetem Innenfilter 10 das Pumpenrad 25 vom Rotor 19 in einer Drehrichtung angetrieben. Dadurch wird Wasser aus dem Inneren des Aquariumbeckens 11 über die Ansaugöffnungen 32 in Form insbesondere der Öffnungen 79, 80, insbesondere Schlitze, an den Fortsätzen 77, 78 in die Filterkammer 31 und durch den darin befindlichen Filtereinsatz 34 quer hindurch gesaugt, wobei das Wasser durch den Saugkanal 30 und die Pumpenkammer 26 in den abgeschlossenen inneren Druckkanal 40 gelangt und durch diesen hochsteigt und am oberen Ende des Innenfilters 10 durch die Austrittsöffnung 41, insbesondere die schlitzförmige Öffnung 72 in der Kappe 71, entsprechend dem Pfeil in Fig. 2 abgegeben wird und wieder in das Aquariumbecken 11 gelangt. Bei diesem Umlauf des Wassers wird dieses im Innenfilter 10 durch Filtrierung gereinigt. Bedarfsweise kann auch eine elektrische Heizeinrichtung zur Beheizung integriert sein.

Der elektrische Teil des Elektromotors 17 und die elektrische Zuleitung 20 sind so abgedichtet, daß ein etwaiger Kontakt mit Wasser mit Sicherheit ausgeschlossen ist.

Von Zeit zu Zeit müssen einige Bestandteile des Innenfilters 10 gereinigt werden. Dies kann vom Benutzer schnell, einfach, ohne besondere Sachkenntnis und Spezialwerkzeuge in folgender Weise praktiziert werden. Bei ausgeschaltetem Elektromotor 17 zieht der Benutzer zunächst das dritte Segment 70 in Gestalt des oberen Deckels z. B. nach oben hin vom zweiten Segment 60 ab, wodurch das obere Ende des zweiten Segments 60 freigelegt wird.

Das so separierte dritte Segment 70 kann vom Benutzer problemlos gereinigt werden. Gewünschtenfalls kann dabei auch die Kappe 71 und/oder der Schieber 74 mit Verstellhandhabe 76 abgelöst werden, sofern auch in diesen Bereichen eine Reinigung gewünscht wird. Auch zu Zwecken des Austauschs bei Beschädigungen od. dgl. wird entsprechend vorgegangen.

Soll nur der Filtereinsatz 34 entfernt und z. B. gereinigt werden, so greift der Benutzer von oben her in die Filterkammer 31 ein und zieht daraus den Filtereinsatz 34 heraus. Etwaiges abtropfendes Wasser sowie sonstiges, noch in der Filterkammer 31 befindliches Wasser, das jeweils mit etwaigen Schmutzpartikeln beladen sein kann, wird in beschriebener Weise innerhalb der Wanne in der Filterkammer 31 gesammelt und am Auslaufen oder Abtropfen in das Aquariumbecken 11 gehindert. Der entnommene Filtereinsatz 34 kann gereinigt oder gegen einen anderen ausgetauscht werden. Danach kann in umgekehrter Weise das dritte Segment 70 wieder aufgesetzt werden, so daß der Innenfilter 10 wieder betriebsbereit ist.

Soll vorher auch das Innere des zweiten Segments 60 gereinigt werden, z. B. auch das Pumpenrad 25 und der daran angrenzende Bereich, so wird das zweite Segment 60 vom am Aquariumbecken 11 verbleibenden ersten Segment 50 abgelöst und aus dem Aquariumbecken 11 herausgenommen. Auch hierbei kann etwaiges Wasser, beladen mit Schmutzpartikeln, das sich innerhalb der Filterkammer 31 befindet, nicht in das Aquariumbecken 11 ablaufen und dieses verunreinigen.

Beim Herausnehmen des zweiten Segments 60 wird zugleich der Rotor 19 mit Lagerachse 22 und Lagern 23 und 24 vom ersten Segment 50 getrennt und nach oben abgezogen, so daß auch sämtliche Bestandteile des Rotors einschließlich des Pumpenrades 25 nunmehr frei zugänglich sind. Auch das Innere der Pumpenkammer 26 ist dann von außen zugänglich, weil der die Pumpenkammer 26 am in Fig. 3 rechten Ende begrenzende untere Bereich 55 Bestandteil des ersten Segments 50 ist und im Aquariumbecken 11 bei dieser Trennung verbleibt. Auch der Wandteil 66 des Saugkanals 30 wird frei zugänglich, da die andere, den Saugkanal begrenzende vordere Wandung 54 als Teil des ersten Segmentes 50 im Aquariumbecken 11 verbleibt.

Bei herausgenommenem zweiten Segment 60 kann der gesamte Rotor 19 mit Lagerachse 22 und Lagern 23 und 24 und mit Pumpenrad 25 gereinigt, gewartet und bedarfsweise ersetzt werden. Auch das Innere der Filterkammer 31 läßt sich dann bei entnommenem Filtereinsatz 34 problemlos reinigen. Soll der Innenfilter 10 wieder zum betriebsbereiten Körper zusammengesetzt werden, wird in umgekehrter Weise vorgegangen, was ebenfalls schnell und problemlos vonstatten geht.

Bei einer anderen, nicht gezeigten Ausführungsform sind die Ansaugöffnungen 32 nicht im dritten Segment 70 enthalten sondern es sind auf der Vorderseite der Brustwandung des ersten Segments 60 Ansaugbereiche, z.B. durch dortige Stege und Kanäle dazwischen, gebildet, die oben vom zweiten Segment 60 übergriffen sind, wodurch eine Verbindung mit der Filterkammer 31 und dem Saugkanal 30 hergestellt ist.

## Patentansprüche

1. Innenfilter für Aquarien, mit einem Elektromotor (17), der einen ein Pumpenrad (25) in einer Pumpenkammer (26) antreibenden Rotor (19) und einen Stator (18) aufweist, mit einem Saugkanal (30), der einerseits mit der Pumpenkammer (26) und andererseits mit einer Filterkammer (31) in Verbindung steht, in die über mindestens eine Ansaugöffnung (32) Wasser einsaugbar ist, und mit einem Druckkanal (40), der einerseits mit der Pumpenkammer (26) und andererseits mit mindestens einer Austrittsöffnung (41) in Verbindung steht,
**gekennzeichnet durch**
drei voneinander lösbare bzw. wieder zusammensetzbare Segmente (50, 60, 70), von denen das erste Segment (50) den Stator (18) mit elektrischer Zuleitung (20) und das zweite Segment (60) den Rotor (19) mitsamt Lagerachse (22) und Lagern (23, 24) sowie Pumpenrad (25), die Pumpenkammer (26) sowie die Filterkammer (31) und den Saugkanal (30) sowie den Druckkanal (40) enthält und das dritte Segment (70) als auf das zweite Segment (60) aufsetzbarer und letzteres abschließender Deckel ausgebildet ist und zumindest die mit dem Druckkanal (40) in Verbindung bringbare mindestens eine Austrittsöffnung (41) aufweist, wobei die mit der Filterkammer (31) in Verbindung bringbare mindestens eine Ansaugöffnung (32) im Bereich des dritten Segments (70) oder des ersten Segments (50) vorgesehen ist.

2. Innenfilter nach Anspruch 1,
**dadurch gekennzeichnet,**
daß das dritte Segment (70) eine Kappe (71) aufweist, die den Druckkanal (40) abschließt und zumindest eine Öffnung (72) enthält, die die Austrittsöffnung (41) bildet, und daß die Kappe (71) mit ihrem die Öffnung (72) enthaltenden Teil, z.B. ihrer Wandung (73), schwenkverstellbar ist.

3. Innenfilter nach Anspruch 1 oder 2,
**dadurch gekennzeichnet,**
daß das dritte Segment (70) einen den Durchlaßquerschnitt im Druckkanal (40), insbesondere im Übergangsbereich vom Druckkanal (40) zur Austrittsöffnung (41), steuernden Schieber (74) aufweist, mittels dessen der Volumenstrom steuerbar ist.

4. Innenfilter nach einem der Ansprüche 1 bis 3,
**dadurch gekennzeichnet,**
daß das dritte Segment (70) mindestens einen mit Öffnungen (79, 80), insbesondere Schlitzen, die die Ansaugöffnungen (32) bilden, versehenen Fortsatz (77, 78) aufweist, der von den Öffnungen (79, 80) in den Saugkanal (30), insbesondere zunächst in die Filterkammer (31), überleitet.

5. Innenfilter nach Anspruch 4,
**dadurch gekennzeichnet,**
daß das dritte Segment (70) auf einer Seite, insbesondere auf der Vorderseite (81), zwei in Abstand voneinander verlaufende, zueinander etwa parallele und gleichartige Fortsätze (77, 78) aufweist.

6. Innenfilter nach einem der Ansprüche 1 bis 5,
**dadurch gekennzeichnet,**
daß der mindestens eine Fortsatz (77, 78) des dritten Segments (70) das zweite Segment (60) am zugeordneten oberen Ende auf einer Seite, insbesondere der Vorderseite (61), übergreift.

7. Innenfilter nach einem der Ansprüche 1 bis 6,
**dadurch gekennzeichnet,**
daß die die Austrittsöffnung (41) bildende Öffnung (72) in der Kappe (71), insbesondere in deren Wandung (73), am dritten Segment (70) auf der gleichen Seite, insbesondere Vorderseite (81), des dritten Segments (70) wie die mindestens eine Ansaugöffnung (32), insbesondere die Öffnungen (79, 80) im Fortsatz (77, 78), jedoch mit Abstand oberhalb davon vorgesehen ist.

8. Innenfilter nach einem der Ansprüche 1 bis 7,
**gekennzeichnet durch**
einen langgestreckten und im wesentlichen runden und/oder eckigen, hierbei insbesondere mehreckigen, z.B. im wesentlichen viereckigen, insbesondere etwa rechteckigen oder etwa quadratischen, Körper im zusammengesetzten Zustand seiner drei Segments (50,60,70).

9. Innenfilter nach einem der Ansprüche 1 bis 8,
**dadurch gekennzeichnet,**
daß das erste Segment (50) in Seitenansicht etwa L-förmig ausgebildet ist, wobei die Rückseite (12) des etwa vertikalen, längeren L-Schenkels (52) die Befestigungsseite bildet, mit der der Innenfilter (10), insbesondere Körper, an einer Innenseite (13) einer Aquariumwand (14) befestigbar ist.

10. Innenfilter nach einem der Ansprüche 1 bis 9,
**gekennzeichnet durch**
rückseitig, insbesondere an der Rückseite (12) des ersten Segments (50), angeordnete Halter (15), vorzugsweise Sauger, zur lösbaren Befestigung an einer Aquariumwand (14).

11. Innenfilter nach einem der Ansprüche 1 bis 10,
**dadurch gekennzeichnet,**
daß das erste Segment (50) insbesondere rückseitig eine rinnenförmige Aufnahme (53) aufweist, in der die elektrische Zuleitung (20) nach oben geführt ist.

12. Innenfilter nach einem der Ansprüche 1 bis 11,
**dadurch gekennzeichnet,**
daß das erste Segment (50) in seinem unteren Teil, insbesondere im etwa horizontalen, kürzeren L-Schenkel (51) und/oder Übergangsbereich beider L-Schenkel (51, 52) ineinander, den Stator (18) des Elektromotors (17) enthält, dessen den Rotor (19) aufnehmender Durchlaß (21) im wesentlichen vertikal gerichtet ist, und vorzugsweise, daß am unteren Teil des ersten Segments (50) Ansaugbereiche, z.B. Stege und Kanäle dazwischen, ausgebildet sind, die mit der Filterkammer (31) und/oder dem Saugkanal (30) in Verbindung stehen.

13. Innenfilter nach einem der Ansprüche 1 bis 12,
**dadurch gekennzeichnet,**
daß das erste Segment (50) mit einer etwa vertikal verlaufenden vorderen Wandung (54), die in Abstand von dessen Rückseite (12) verläuft, eine Wandungsbegrenzung des Saugkanals (30) bildet, der beim Abziehen des zweiten Segments (60) freilegbar ist.

14. Innenfilter nach Anspruch 13,
**dadurch gekennzeichnet,**
daß die vordere Wandung (54) des ersten Segments (50) im unteren Bereich (55), der bis zum etwa horizontalen, kürzeren L-Schenkel (51) führt, einen Teil einer Wandungsbegrenzung der Pumpenkammer (26) bildet.

15. Innenfilter nach einem der Ansprüche 1 bis 14,
**dadurch gekennzeichnet,**
daß das zweite Segment (60) um die Höhe des dritten Segments (70) und des etwa horizontalen, kürzeren L-Schenkels (51) des ersten Segments (50) kürzer und um die Tiefe des etwa vertikalen, längeren L-Schenkels (52) schmaler als das erste Segment (50) und derart bemessen ist, daß es - auf den überstehenden Teil des etwa horizontalen, kürzeren L-Schenkels (51) des ersten Segments (50) aufgesetzt - das erste Segment (50) zu einem im Querschnitt im wesentlichen viereckigen, insbesondere etwa rechteckigen oder etwa quadratischen, Körper ergänzt.

16. Innenfilter nach einem der Ansprüche 1 bis 15,
**dadurch gekennzeichnet,**
daß das dritte Segment (70), insbesondere der Deckel, auf die Oberseite des zweiten Segments (60) aufsetzbar ist und dieses bis auf die Höhe des etwa vertikalen, längeren L-Schenkels (52) des ersten Segments (50) verlängert.

17. Innenfilter nach einem der Ansprüche 1 bis 16,
**dadurch gekennzeichnet,**
daß das zweite Segment (60) einen durch bis in die Pumpenkammer (26) führende Wände (62, 63) abgeschlossenen, etwa L-förmigen und den Druckkanal (40) bildenden Innenkanal aufweist, dessen etwa vertikaler L-Schenkel vorderseitig und dessen etwa horizontaler L-Schenkel unten verläuft, und daß der im Inneren des zweiten Segments (60) daran angrenzende Bereich die Filterkammer (31) bildet.

18. Innenfilter nach einem der Ansprüche 1 bis 17,
**dadurch gekennzeichnet,**
daß das zweite Segment (60) auf seiner Rückseite, die der vorderen Wandung (54) des ersten Segments (50) zugewandt ist, einen die Filterkammer (31) begrenzenden, hochragenden Wandteil (66) aufweist, der einen Abschnitt des Saugkanals (30) begrenzt.

19. Innenfilter nach einem der Ansprüche 1 bis 18,
**dadurch gekennzeichnet,**
daß das zweite Segment (60) einen Bodenteil (67) enthält, dessen nach oben weisende Seite den Boden der Filterkammer (31) und dessen nach unten weisende Seite die Pumpenkammer (26) begrenzt.

20. Innenfilter nach Anspruch 18 oder 19,
**dadurch gekennzeichnet,**
daß der hochragende Wandteil (66) im Bogen oder schräg in den Bodenteil (67) übergeht.

21. Innenfilter nach einem der Ansprüche 17 bis 20,
**dadurch gekennzeichnet,**
daß der den Druckkanal (40) bildende Innenkanal durch eine vorderseitige Wand (62), insbesondere einen zumindest geringfügig etwa balkonartig nach vorn vorstehenden Wandstreifen, und eine sich etwa über die Breite dieser vorderen Wand (62) erstreckende und daran anschließende innere Wand (63) gebildet ist, die zusammen einen in bezug auf die Filterkammer (31) bis hin zur Pumpenkammer (26) abgeschlossenen Rohrkanal begrenzen.

22. Innenfilter nach einem der Ansprüche 1 bis 21,
**dadurch gekennzeichnet,**
daß das dritte Segment (70), insbesondere der Deckel, mit einem nach unten offenen Rohrteil (75) in das oben offene Ende (42) des Druckkanals (40), insbesondere Innenkanals, des zweiten Segments (60) eingreift.

23. Innenfilter nach einem der Ansprüche 3 bis 22,
**dadurch gekennzeichnet,**
daß der Schieber (74) am dritten Segment (70) quer in den Rohrteil (75) eingreift und dessen Durchlaßquerschnitt steuert.

24. Innenfilter nach einem der Ansprüche 1 bis 23,
**dadurch gekennzeichnet,**
daß das zweite Segment (60) eine nach unten vorstehende Haltevorrichtung (91) aufweist, an der der Rotor (19) mitsamt Lagern (23, 24) gehalten ist und die beim Aufsetzen des zweiten Segments (60) auf den etwa horizontalen, kürzeren L-Schenkel (51) des ersten Segments (50) in das Innere (57) dieses L-Schenkels (51) und derart eintaucht, daß der Rotor (19) im Durchlaß (21) des Stators (18) verläuft.

25. Innenfilter nach Anspruch 24,
**dadurch gekennzeichnet,**
daß die Haltevorrichtung (91) eine untere Lagerkappe (93) aufweist, in der das untere Lager (24), z.B. eine Gummitülle, für das untere Ende der Lagerachse (22) des Rotors (19) aufgenommen ist.

26. Innenfilter nach einem der Ansprüche 1 bis 25,
**dadurch gekennzeichnet,**
daß der Bodenteil (67) des zweiten Segments (60) eine nach oben und zur Filterkammer (31) hin gerichtete Ausstülpung (90) aufweist, in der das obere Lager (23), z.B. eine Gummitülle, für das obere Ende der Lagerachse (22) des Rotors (19) aufgenommen ist.

27. Innenfilter nach einem der Ansprüche 1 bis 26,
**dadurch gekennzeichnet,**
daß das Pumpenrad (25) an dem oberen, in die Pumpenkammer (26) hinein vorstehenden Ende des Rotors (19) angeordnet und in der über dem Rotor (19) verlaufenden Pumpenkammer (26) enthalten ist.

28. Innenfilter nach einem der Ansprüche 1 bis 27,
**dadurch gekennzeichnet,**
daß die Filterkammer (31) des zweiten Segments (60) beidseitig durch dessen äußere Seitenwände (65) begrenzt ist.

29. Innenfilter nach einem der Ansprüche 1 bis 28,
**dadurch gekennzeichnet,**
daß in der Filterkammer (31) mindestens ein Filtereinsatz (34) enthalten ist, der mit dem unteren Ende in Abstand oberhalb des Bodenteils (67) gehalten ist.

30. Innenfilter nach einem der Ansprüche 1 bis 29,
**dadurch gekennzeichnet,**
daß der Bodenteil (67) der Filterkammer (31) hochragende Vorsprünge (69, 90), z.B. Stege, aufweist, auf denen ein Filtereinsatz (34) in der Filterkammer (31) aufsitzt.

31. Innenfilter nach einem der Ansprüche 26 bis 30,
**dadurch gekennzeichnet,**
daß die Ausstülpung (90) mit ihrer zur Filterkammer (31) weisenden Oberwand einen Vorsprung bildet, auf dem ein Filtereinsatz (34) in der Filterkammer (31) aufsitzt.

32. Innenfilter nach einem der Ansprüche 1 bis 31,
**dadurch gekennzeichnet,**
daß das erste Segment (50) ein einstückiges Kunststofformteil ist, in das der Stator (18) des Elektromotors (17) mit elektrischer Zuleitung (20) auswechselbar eingesetzt ist.

33. Innenfilter nach einem der Ansprüche 1 bis 32,
**dadurch gekennzeichnet,**
daß das zweite Segment (60) ein einstückiges Kunststofformteil ist, in das der Rotor (19) mitsamt Lagerachse (22) und Lagern (23, 24) sowie Pumpenrad (25) und ggf. mindestens ein Filtereinsatz (34) auswechselbar eingesetzt sind.

34. Innenfilter nach einem der Ansprüche 1 bis 33,
**dadurch gekennzeichnet,**
daß das dritte Segment (70) ein einstückiges Kunststofformteil formteil ist, in das ggf. die schwenkverstellbare Kappe (71) und/oder der querverschiebliche Schieber (74), ggf. mitsamt einer Verstellhandhabe (76) daran, auswechselbar eingesetzt sind.

## Claims

1. Inside filter for aquariums with an electric motor (17), which has a rotor (19) driving a pump impeller (25) in a pump chamber (26) and a stator (18) with a suction port (30) connected on one side to the pump chamber (26) and on the other side to a filter chamber (31) into which water can be suctioned through at least one suction opening (32), and with a pressure channel (40) which is connected on one side to the pump chamber (26) and on the other side to at least one outlet opening (41)
**characterised by**
three segments (50, 60, 70) which can be disconnected from one another or put together again, of which the first segment (50) contains the stator (18) with electrical supply cable (20) and the second segment (60) contains the rotor (19) together with the bearing axle (22) and bearings (23, 24), the pump impeller (25), pump chamber (26), filter chamber (31), the suction port (30) and the pressure channel (40) and the third segment (70) is designed to fit onto the second segment (60) as a sealing lid and has at least one outlet opening (41) which can be connected to the pressure channel (40), wherein the at least one suction opening (32) which can be connected to the filter chamber (31) is provided in the region of the third segment (70) or the first segment (50).

2. Inside filter according to claim 1,
**characterised in that**
the third segment (70) has a cover (71) which seals the pressure channel (40) and has at least one opening (72) forming the outlet opening (41) and in that the part of the cover (71) containing the opening (72), e.g. its wall (73) can be pivot adjusted.

3. Inside filter according to claim 1 or 2,
**characterised in that**
the third segment (70) has a gate (74) controlling the cross-section of the opening in the pressure channel (40), in particular in the transition region from the pressure channel (40) to the outlet opening (41) by means of which volume flow can be controlled.

4. Inside filter according to one of claims 1 to 3,
**characterised in that**
the third segment (70) has at least one extension (77, 78) furnished with openings (79, 80), in particular slots, forming the suction openings (32) which extension passes from the openings (79, 80) into the suction channel (30) in particular into the filter chamber (31) first.

5. Inside filter according to claim 4
**characterised in that**
the third segment (70) has on one side, in particular on the front (81), two similar extensions (77, 78) at a distance from one another and roughly in parallel.

6. Inside filter according to one of claims 1 to 5,
**characterised in that**
the at least one extension (77, 78) of the third segment (70) overlaps the second segment (60) on one side at the assigned upper end, in particular the front side (61).

7. Inside filter according to one of claims 1 to 6,
**characterised in that**
the opening (72) forming the outlet opening (41) in the cover (71), in particular in its wall (73), is provided on the third segment (70) on the same side, in particular the front (81), of the third segment (70) like the at least one suction opening (32), in particular the openings (79, 80) in the extension (77, 78), but at a distance thereabove

8. Inside filter according to one of claims 1 to 7,
**characterised by**
a body longitudinally extended and basically round and/or angular, in particular polygonal, e.g. quadrangular, i.e. rectangular or quadratic, which is formed when the three segments (50, 60, 70) are assembled.

9. Inside filter according to one of claims 1 to 8,
**characterised in that**
the first segment (50) is designed in side view to be roughly L-shaped, whereby the back (12) of the roughly vertical longer L-arm (52) forms the attachment side, whereby the inside filter (10), in particular the body, can be fixed to the inside (13) of an aquarium wall (14).

10. Inside filter according to one of claims 1 to 9,
**characterised by**
attaching devices (15) on the back, in particular on the back (12) of the first segment (50), preferably suction pads for detachably fixed to an aquarium wall (14).

11. Inside filter according to one of claims 1 to 10,
**characterised in that**
the first segment (50) has, in particular on the back, a grooved recess (53) which guides the electric cable (20) upwards.

12. Inside filter according to one of claims 1 to 11,
**characterised in that**
the first segment (50) contains the stator (18) of the electric motor (17) in its lower section, in particular in the roughly horizontal shorter L-arm (51) and/or junction region of both L-arms (51, 52), of which segment the opening (21) accommodating the rotor (19) is essentially vertical and preferably, in that suction pads, e.g. webs with channels in between are formed on the lower part of the first segment (50), which are connected to the filter chamber (31) and/or the suction port (30).

13. Inside filter according to one of claims 1 to 12
**characterised in that**
the first segment (50), with a roughly vertical front wall boundary (54) at a distance from its rear side (12), forms a wall boundary of the suction port (30) which can be uncovered on removing the second segment (60).

14. Inside filter according to claim 13,
**characterised in that**
the front wall (54) of the first segment (50) in the lower region (55), which leads to the roughly horizontal shorter L-arm (51), forms part of a wall boundary of the pump chamber (26).

15. Inside filter according to one of claims 1 to 14,
**characterised in that**
the second segment (60) is shorter by the height of the third segment (70) and the roughly horizontal, shorter L-arm (51) of the first segment (50) and narrower by the depth of the roughly vertical, longer L-arm (52) than the first segment (50) and is proportioned so that - fitted on the projecting part of the roughly horizontal shorter L-arm (51) of the first segment (50) - it completes the first segment (50) to form a body roughly rectangular in cross-section, that is in particular rectangular or quadratic.

16. Inside filter according to one of claims 1 to 15,
**characterised in that**
the third segment (70) in particular the lid, can be fitted on the upper side of the second segment (60) and this extends up to the level of the roughly vertical, longer L-arm (52) of the first segment (50).

17. Inside filter according to one of claims 1 to 16,
**characterised in that**
the second segment (60) has an inside channel sealed by walls (62, 63) leading into the pump chamber (26), roughly L-shaped and forming the pressure channel (40), the roughly vertical L-arm of which is at the front and the roughly horizontal L-arm of which is at the bottom and in that the bordering region inside the second segment (60) forms the filter chamber (31).

18. Inside filter according to one of claims 1 to 17
**characterised in that**
the second segment (60) on its rear side facing the front wall (54) of the first segment (50), has an upwards projecting wall (66) bordering the filter chamber (31) which borders a section of the suction port (30).

19. Inside filter according to one of claims 1 to 18,
characterised in that the second segment (60) contains a base part (67) the upper side of which borders the base of the filter chamber (31) and the downwards facing side of which borders the pump chamber (26).

20. Inside filter according to claim 18 or 19,
**characterised in that**
the upwards projecting wall (66) passes in a curve or diagonally into the base part (67).

21. Inside filter according to one of claims 17 to 20,
**characterised in that**
the inner channel forming the pressure channel (40) is formed by a front wall (62), in particular a at least slightly balcony-like projecting wall strip and an inner wall (63) extending over the width of this front wall (62) and connecting thereto, which together border a pipe channel sealed off from the filter chamber (31) up to the pump chamber (26).

22. Inside filter according to one of claims 1 to 21,
**characterised in that**
the third segment (70) in particular the lid engages with a pipe section (75) open downwards in the upper open end (42) of the pressure channel (40) in particular the inner channel of the second segment (60).

23. Inside filter according to one of claims 3 to 22,
**characterised in that**
the gate (74) on the third segment (70) engages diagonally in the pipe section (75) and controls its opening cross-section.

24. Inside filter according to one of claims 1 to 23,
**characterised in that**
the second segment (60) has a fastening device (91) projecting downwards to which the rotor (19) with bearings (23, 24) is fixed and which on placing the second segment (60) on the roughly horizontal shorter L-arm (51) of the first segment (50) is submerged inside (57) this L-arm (51) so that the rotor (19) flows in the opening (21) of the stator (18).

25. Inside filter according to claim 24,
**characterised in that**
the fastening device (91) has a lower bearing cover (93) in which the lower bearing (24), e.g. a rubber socket is accommodated for the lower end of the bearing axle (22) of the rotor (19).

26. Inside filter according to one of claims 1 to 25,
**characterised in that**
the base part (67) of the second segment (60) has a protuberance (90) directed upwards towards the filter chamber (31) in which the upper bearing (23), e.g. a rubber socket is accommodated for the upper end of the bearing axle (22) of the rotor (19).

27. Inside filter according to one of claims 1 to 26,
**characterised in that**
the pump impeller (25) is disposed at the upper end of the rotor (19) projecting into the pump chamber (26) and is contained in the pump chamber (26) over the rotor (19).

28. Inside filter according to one of claims 1 to 27,
**characterised in that**
the filter chamber (31) of the second segment (60) is bordered on both sides by its external side walls (65).

29. Inside filter according to one of claims 1 to 28,
**characterised in that**
the at least one filter insert (34) is contained in the filter chamber (31) which is fixed by its lower end at a distance above the base part (67).

30. Inside filter according to one of claims 1 to 29,
**characterised in that**
the base part (67) of the filter chamber (31) has upwards projecting projections (69, 90), e.g. webs, on which a filter insert (34) rests in the filter chamber (31).

31. Inside filter according to one f claims 26 to 30,
**characterised in that**
the protuberance (90) forms a projection with its upper wall pointing to the filter chamber (31) on which a filter insert (34) rests in the filter chamber (31).

32. Inside filter according to one of claims 1 to 31,
**characterised in that**
the first segment (50) is a plastic one-piece moulded part into which the stator (18) of the electric motor (17) with electrical supply cable (20) is removably inserted.

33. Inside filter according to one of claims 1 to 32,
**characterised in that**
the second segment (60) is a plastic one-piece moulded part in which the rotor (19) together with the bearing axle (22) and bearings (23, 24) and pump impeller (25) and if necessary at least one filter insert (34) are removably inserted.

34. Inside filter according to one of claims 1 to 33,
**characterised in that**
the third segment (70) is a plastic one-piece moulded part in which the pivot adjustable cover (71) and/or the laterally displaceable gate (74) are inserted together with an adjusting manipulation device (76).

## Revendications

1. Filtre intérieur pour aquarium , comportant un moteur électrique (17) qui présente un rotor (19) entraînant une roue de pompe (25) placée dans une chambre de pompe (26) et un stator (18), un conduit d'aspiration (30) qui communique d'un côté avec la chambre de pompe (26) et de l'autre côté avec une chambre de filtration (31) dans laquelle l'eau peut être aspirée par au moins un orifice d'aspiration (32), et un conduit de refoulement (40) qui communique d'un côté avec la chambre de pompe (26) et de l'autre côté avec au moins un orifice de sortie (41), caractérisé par trois segments (50, 60, 70) séparables les uns des autres et réassemblables, dont le premier (50) contient le stator (18) avec câble d'alimentation électrique (20), le deuxième (60) contient le rotor (19) avec axe d'appui (22), paliers (23, 24) et la roue de pompe (25), la chambre de pompe (26), la chambre de filtration (31), le conduit d'aspiration (30) et le conduit de refoulement (40), et le troisième (70) est un couvercle pouvant être posé sur le deuxième segment (60) et le fermant et présente l'orifice ou les orifices de sortie (41) pouvant être mis en communication avec le conduit de refoulement (40), l'orifice ou les orifices d'aspiration (32) pouvant être mis en communication avec la chambre de filtration (31) étant prévu(s) dans la zone du troisième segment (70) ou dans celle du premier segment (50).

2. Filtre intérieur selon la revendication 1, caractérisé par le fait que le troisième segment (70) présente un chapeau (71) qui ferme le conduit de refoulement (40) et est pourvu d'au moins une ouverture (72) qui forme l'orifice de sortie (41), et que ce chapeau (71), avec sa partie pourvue de l'ouverture (72), par exemple sa paroi (73), peut être tourné.

3. Filtre intérieur selon l'une des revendications 1 et 2, caractérisé par le fait que le troisième segment (70) présente une vanne (74) commandant la section de passage dans le conduit de refoulement (40), en particulier dans la zone de jonction de celui-ci à l'orifice de sortie (41), et qui permet de régler le débit.

4. Filtre intérieur selon l'une des revendications 1 à 3, caractérisé par le fait que le troisième segment (70) présente au moins un appendice (77, 78) pourvu d'ouvertures (79, 80), en particulier de fentes, qui forment les orifices d'aspiration (32), et qui forme transition des ouvertures (79, 80) au conduit d'aspiration (30), en particulier d'abord à la chambre de filtration (31).

5. Filtre intérieur selon la revendication 4, caractérisé par le fait que le troisième segment (70) présente sur une face, en particulier sur la face avant (81), deux appendices identiques (77, 78) espacés et à peu près parallèles.

6. Filtre intérieur selon l'une des revendications 1 à 5, caractérisé par le fait que l'appendice ou les appendices (77, 78) du troisième segment (70) couvre(nt) le deuxième segment (60) à l'extrémité supérieure correspondante sur une face, en particulier la face avant (61).

7. Filtre intérieur selon l'une des revendications 1 à 6, caractérisé par le fait que l'ouverture (72) formant l'orifice de sortie (41) est prévue dans le chapeau (71), en particulier dans sa paroi (73), sur le troisième segment (70) sur la même face, en particulier la face avant (81), de celui-ci que l'orifice ou les orifices d'aspiration (32), en particulier les ouvertures (79, 80) de l'appendice (77, 78), mais une certaine distance au-dessus de celles-ci.

8. Filtre intérieur selon l'une des revendications 1 à 7, caractérisé, lorsque ses trois segments (50, 60, 70) sont assemblés, par un corps allongé et dans l'ensemble rond et/ou anguleux, en particulier polygonal, par exemple dans l'ensemble quadrangulaire, en particulier à peu près rectangulaire ou à peu près carré.

9. Filtre intérieur selon l'une des revendications 1 à 8, caractérisé par le fait que le premier segment (50), vu de côté, est à peu près en forme de L et la face arrière (12) de la branche de L longue, à peu près verticale (52) forme la face de fixation par laquelle le filtre intérieur (10), en particulier le corps, peut être fixé à une face intérieure (13) d'une paroi d'aquarium (14).

10. Filtre intérieur selon l'une des revendications 1 à 9, caractérisé par des supports (15), de préférence des ventouses, placés sur le côté arrière, en particulier sur la face arrière (12) du premier segment (50), pour la fixation amovible du filtre à une paroi d'aquarium (14).

11. Filtre intérieur selon l'une des revendications 1 à 10, caractérisé par le fait que le premier segment (50) présente en particulier sur le côté arrière un creux en forme de gouttière (53) dans lequel monte le câble d'alimentation électrique (20).

12. Filtre intérieur selon l'une des revendications 1 à 11, caractérisé par le fait que le premier segment (50) contient dans sa partie inférieure, en particulier dans la branche de L courte à peu près horizontale (51) et/ou dans la zone de jonction des deux branches de L (51, 52), le stator (18) du moteur électrique (17), dont le passage (21) recevant le rotor (19) est dirigé sensiblement verticalement, et, de préférence, que sur la partie inférieure du premier segment (50) sont faites des zones d'aspiration, par exemple des nervures et des conduits situés entre celles-ci, qui communiquent avec la chambre de filtration (31) et/ou le conduit d'aspiration (30).

13. Filtre intérieur selon l'une des revendications 1 à 12, caractérisé par le fait que le premier segment (50) forme par une paroi avant à peu près verticale (54) située à une certaine distance de la face arrière (12) de celui-ci une limite du conduit d'aspiration (30), qui peut être dégagé lors du retrait du deuxième segment (60).

14. Filtre intérieur selon la revendication 13, caractérisé par le fait que la paroi avant (54) du premier segment (50) forme dans sa partie inférieure (55), qui va jusqu'à la branche de L courte à peu près horizontale (51), une partie d'une limite de la chambre de pompe (26).

15. Filtre intérieur selon l'une des revendications 1 à 14, caractérisé par le fait que le deuxième segment (60) est plus court que le premier (50) de la hauteur du troisième (70) et de la branche de L courte à peu près horizontale (51) du premier (50) et plus étroit que le premier (50) de la profondeur de la branche de L longue à peu près verticale (52) et est dimensionné de façon telle que lorsqu'il est posé sur la partie saillante de la branche de L courte à peu près horizontale (51) du premier segment (50), il complète ce dernier pour la formation d'un corps de section dans l'ensemble quadrangulaire, en particulier à peu près rectangulaire ou à peu près carrée.

16. Filtre intérieur selon l'une des revendications 1 à 15, caractérisé par le fait que le troisième segment (70), en particulier le couvercle, peut être placé sur le dessus du deuxième segment (60) et allonge ce dernier jusqu'à la hauteur de la branche de L longue à peu près verticale (52) du premier segment (50).

17. Filtre intérieur selon l'une des revendications 1 à 16, caractérisé par le fait que le deuxième segment (60) présente un conduit intérieur à peu près en forme de L qui est fermé par des parois (62, 63) allant jusque dans la chambre de pompe (26), forme le conduit de refoulement (40), et dont la branche de L à peu près verticale s'étend sur le côté avant et la branche de L à peu près horizontale s'étend en bas, et que la zone contiguë à ce conduit à l'intérieur du deuxième segment (60) forme la chambre de filtration (31).

18. Filtre intérieur selon l'une des revendications 1 à 17, caractérisé par le fait que le deuxième segment (60) présente sur sa face arrière, qui est dirigée vers la paroi avant (54) du premier segment (50), une partie de paroi montante (66) qui limite à la fois la chambre de filtration (31) et un tronçon du conduit d'aspiration (30).

19. Filtre intérieur selon l'une des revendications 1 à 18, caractérisé par le fait que le deuxième segment (60) comporte une partie fond (67) dont la face dirigée vers le haut limite le fond de la chambre de filtration (31) et la face dirigée vers le bas limite la chambre de pompe (26).

20. Filtre intérieur selon l'une des revendications 18 et 19, caractérisé par le fait que la partie de paroi mon tante (66) se raccorde par un arc ou obliquement à la partie fond (67).

21. Filtre intérieur selon l'une des revendications 17 à 20, caractérisé par le fait que le conduit intérieur formant le conduit de refoulement (40) est formé par une paroi avant (62), en particulier une bande de paroi saillant au moins légèrement vers l'avant à peu près à la manière d'un balcon, et une paroi intérieure (63) s'étendant à peu près sur toute la largeur de cette paroi avant (62) et contiguë à celle-ci qui limitent ensemble un conduit tubulaire fermé, isolé de la chambre de filtration (31), jusqu'à la chambre de pompe (26).

22. Filtre intérieur selon l'une des revendications 1 à 21, caractérisé par le fait que le troisième segment (70), en particulier le couvercle, s'engage par un morceau de tuyau ouvert vers le bas (75) dans l'extrémité ouverte en haut (42) du conduit de refoulement (40), en particulier du conduit intérieur, du deuxième segment (60).

23. Filtre intérieur selon l'une des revendications 3 à 22, caractérisé par le fait que la vanne (74) du troisième segment (70) s'engage transversalement dans le morceau de tuyau (75) et commande la section de passage de celui-ci.

24. Filtre intérieur selon l'une des revendications 1 à 23, caractérisé par le fait que le deuxième segment (60) présente un dispositif de support saillant vers le bas (91) sur lequel sont montés le rotor (19) et les paliers (23, 24) et qui, lors de la pose du deuxième segment (60) sur la branche de L courte à peu près horizontale (51) du premier segment (50), plonge à l'intérieur (57) de cette branche de L (51) de façon telle que le rotor (19) se trouve dans le passage (21) du stator (18).

25. Filtre intérieur selon la revendication 24, caractérisé par le fait que le dispositif de support (91) présente un chapeau de palier inférieur (93) dans lequel est logé le palier inférieur (24), par exemple une douille en caoutchouc, pour l'extrémité inférieure de l'axe d'appui (22) du rotor (19).

26. Filtre intérieur selon l'une des revendications 1 à 25, caractérisé par le fait que la partie fond (67) du deuxième segment (60) présente une partie retroussée (90) dirigée vers le haut et vers la chambre de filtration (31) et dans laquelle est logé le palier supérieur (23), par exemple une douille en caoutchouc, pour l'extrémité supérieure de l'axe d'appui (22) du rotor (19).

27. Filtre intérieur selon l'une des revendications 1 à 26, caractérisé par le fait que la roue de pompe (25) est placée à l'extrémité supérieure, entrant dans la chambre de pompe (26), du rotor (19) et se trouve dans la chambre de pompe (26) s'étendant au-dessus du rotor (19).

28. Filtre intérieur selon l'une des revendications 1 à 27, caractérisé par le fait que la chambre de filtration (31) du deuxième segment (60) est limitée des deux côtés par les parois latérales extérieures (65) de celui-ci.

29. Filtre intérieur selon l'une des revendications 1 à 28, caractérisé par le fait que dans la chambre de filtration (31) est placé au moins un élément filtrant (34) qui est tenu par son extrémité inférieure à une certaine distance au-dessus de la partie fond (67).

30. Filtre intérieur selon l'une des revendications 1 à 29, caractérisé par le fait que la partie fond (67) de la chambre de filtration (31) présente des saillies montantes (69, 90), par exemple des nervures, sur lesquelles un élément filtrant (34) repose dans la chambre de filtration (31).

31. Filtre intérieur selon l'une des revendications 26 à 30, caractérisé par le fait que la partie retroussée (90) forme par sa paroi supérieure dirigée vers la chambre de filtration (31) une saillie sur laquelle un élément filtrant (34) repose dans la chambre de filtration (31).

32. Filtre intérieur selon l'une des revendications 1 à 31, caractérisé par le fait que le premier segment (50) est une pièce moulée en plastique monobloc dans laquelle est monté, remplaçable, le stator (18) du moteur électrique (17) avec le câble d'alimentation électrique (20).

33. Filtre intérieur selon l'une des revendications 1 à 32, caractérisé par le fait que le deuxième segment (60) est une pièce moulée en plastique monobloc dans laquelle sont montés, remplaçables, le rotor (19) avec l'axe d'appui (22), les paliers (23, 24) et la roue de pompe (25) et éventuellement au moins un élément filtrant (34).

34. Filtre intérieur selon l'une des revendications 1 à 33, caractérisé par le fait que le troisième segment (70) est une pièce moulée en plastique monobloc dans laquelle sont montés éventuellement le chapeau tournant (71) et/ou la vanne mobile transversalement (74), éventuellement avec une manette de réglage (76) sur elle.
